(19) Europäisches Patentamt / European Patent Office / Office européen des brevets

(11) **EP 4 140 726 A1**

(12) **EUROPEAN PATENT APPLICATION**

(43) Date of publication:
01.03.2023 Bulletin 2023/09

(21) Application number: 21193725.5

(22) Date of filing: 30.08.2021

(51) International Patent Classification (IPC):
*B32B 5/14* (2006.01)    *B32B 17/10* (2006.01)

(52) Cooperative Patent Classification (CPC):
**B32B 17/10036; B32B 5/142; B32B 17/10183; B32B 17/10266; B32B 17/10275; B32B 17/10339; B32B 17/10348; B32B 17/10761;** B32B 2307/41; B32B 2307/412

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Kuraray Europe GmbH**
**65795 Hattersheim (DE)**

(72) Inventors:
• **BIER, Felix**
**76879 Ottersheim (DE)**
• **KELLER, Uwe**
**77210 Avon (FR)**

(74) Representative: **Janßen, Christian Oliver**
**Kuraray Europe GmbH**
**Phillip-Reis-Straße 4**
**65795 Hattersheim (DE)**

(54) **COLOUR TRANSITION ZONES FOR COMBINING DIFFERENT OBSCURATION AREAS IN LAMINATED GLASS**

(57)    The present invention relates to laminated glass comprising two obscuration areas (2,4) provided with a colour transition zone (41) to improve the aesthetic appearance of a windshield.

Fig. 4

EP 4 140 726 A1

**Description**

The present invention relates to laminated glass comprising two obscuration areas provided with a colour transition zone to improve the aesthetic appearance of a windshield.

In most windshields for cars, at least one glass sheet is provided with a non-transparent, mostly black, frame to protect the sealing or the adhesive which mechanically connects the windshield with the chassis from UV radiation. A common technique is to silk screen print low melting black glass frit on the glass surface and then sinter this frit at temperatures over 600 °C.

Applying the so-called "enamel frit" with a sintering process is an established technology, but it alters the heat absorption properties of the glass part at the position of the obscuration areas, what causes temperature gradients in the glass part over short distances and will thus give rise to strong local deviations from the intended geometry. Resulting bending flaws can worsen the visual appearance of the glazing part for driver and passengers looking through such a glazing part, or may even give rise to too strong local changes of optical refraction power (optical flaw) what leads to failures in the operation of optical sensors positioned behind the windshield. Such optical devices or sensors are usually mounted behind non-transparent obscuration areas to avoid stray light and to cover the devices form being seen form outside of the vehicle. Such obscuration areas for windscreens made form "black frit" provided with cameras as optical sensors are for example disclosed in US20160243796.

Especially for autonomous driving or assisted driving, the demands to the quality of optical devices in cars has increased and optical flaws in the laminated glass are not acceptable in the industry.

To this end, WO 2019/121535 A1 describes thin PVB films having low plasticizer content coated or printed with an obscuration zone, which can be combined with common plasticized PVB films to produce laminated glazing.

However, it is still desired to provide the windshield with a conventional enamel print in the remaining, uncritical zones, i.e. the zones of the windshield where no optical devices are located. Such combination of conventional enamel frit and printed thin PVB films would improve the cost of the windshield as the enamel print is more cost-efficient than the printed thin PVB films.

However, a perfect match of the colour and/or the gloss of the enamel print and the print on the PVB film is impossible to achieve due to different composition of inks, different smoothness of the ink layer surface, variations in the hue of the ceramic frit, etc. Even if a perfect colour match could be achieved under specific lighting conditions such as bright daylight, the colour match might still be insufficient when artificial light is used, e.g. as used in a show-room.

Accordingly, it was an objective of the invention to provide a laminated glass for a windshield of a motor vehicle with improved appearance, improved cost and/or improved manufacturability. Particularly, it was an objective of the invention to provide a laminated glass with a smooth transition between the different obscuration prints, which is optically appealing to and/or less perceptible by the human eye, especially when inspected from the outside of the vehicle.

These and other objectives were solved by the present invention.

Accordingly, a first embodiment of the present invention concerns a laminated glass for a motor vehicle comprising a first glass sheet and a second glass sheet laminated by means of at least one thermoplastic interlayer, wherein

- the at least one thermoplastic interlayer comprises a film A comprising a first opaque zone with a light transmission of less than 10% of visible light, and a film B comprising a polyvinyl acetal and a plasticizer, and wherein
- the first and/or the second glass sheet comprises at least on one side a second opaque zone with a light transmission of less than 10% of visible light, and wherein
- the opaque zone selected from the first opaque zone and the second opaque zone which is located closer to the side of the laminated glass facing the outside of the motor vehicle is directly adjacent to a colour transition zone, wherein the opaqueness of the colour transition zone is gradually decreasing over a length of at least 1 mm from a light transmission of less than 10% of visible light on the one end directly adjacent to the opaque zone to a light transmission of more than 50% on the other end of the colour transition zone.

It has been surprisingly found by the present inventors that the optical appearance of the windshield has been substantially improved when at least the obscuration area closer to the outside of the motor vehicle has a colour transition zone.

The term "comprising a first opaque zone with a light transmission of less than 10% of visible light" is intended to denote that film A comprises at least some part which has low transparency to light of a wavelength between 380 and 780 nm. In other words, the human eye cannot at all or only to a minimal extent see through at least parts of film A as such before lamination. Preferably, the first opaque zone has a light transmission of less than 5% of visible light, more preferably, the first opaque zone has a light transmission of about 0% of visible light.

The term "first and/or the second glass sheet comprises at least on one side a second opaque zone with a light transmission of less than 10% of visible light" is intended to denote that at least one of the surfaces of the first and/or the second glass sheet, such surfaces conventionally being numbered from S1 facing the outside of the vehicle to S4 facing the inside of the vehicle while S2 and S3 are facing the interlayer, is modified to comprise at least some part which has low transparency to light of a wavelength between 380 and 780 nm. In other words, the human eye cannot at all or only to a minimal extent see through at least said parts of the modified glass sheet. The modification can entail printing or coating a region on the surface or attaching a coloured polymer film, preferably a coloured PET film, to the surface of the glass sheet. Most preferably, the second opaque zone is provided by an enamel print on at least one side of the first and/or the second glass sheet. Also preferably, the second opaque zone has a light transmission of less than 5% of visible light, more preferably, the second opaque zone has a light transmission of about 0% of visible light.

Laminated glass intended for use as a windshield always has a side which is supposed to face the outside of the vehicle. Accordingly, one opaque zone is located closer to the side of the laminated glass which, after mounting the laminated glass, shall face the outside of the motor vehicle. Said opaque zone, be it the first (on the film A) or the second (on the glass surface) opaque zone, shall be directly adjacent to the colour transition zone.

The term "directly adjacent to a colour transition zone" shall denote that the colour transition zone is located between the opaque zone and the residual, non-opaque area of the laminated glass. The colour transition zone extends on the one end directly where the opaque zone ends and on the other end, where the opaqueness is not gradually decreasing anymore, i.e. where the opaqueness reaches the level of the residual, non-opaque areas of the laminated glass.

The term "gradually decreasing over a length of at least 10 mm" shall denote that the colour transition zone is at least 10 mm in length starting from the one end touching the opaque zone to the other end, and that on the length of this at least 10 mm the opaqueness is gradually decreasing.

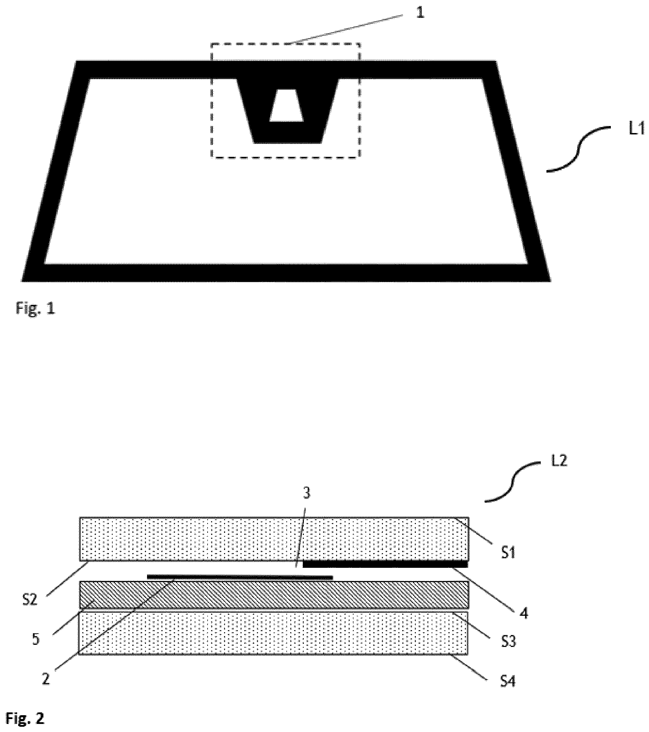

Fig. 1 shows a conventional glass laminate (L1) for a windshield with black obscuration print realized by enamel print on glass and subsequent firing of print into glass.

Fig. 2 shows the cross section of a comparative laminate L2 not according to the invention. The laminate consists of a first glass sheet with one surface (S1) facing the outside of the motor vehicle and one surface (S2) which carries an enamel print (4). The first glass sheet is bonded by means of a conventional, plasticized film B (5) to a second glass sheet one surface S3. The laminate further comprises a thin plasticizer-free film A (2), which carries a printed layer on its entire surface, located between S2 and film B (5), thereby overlapping the ceramic print (4) .

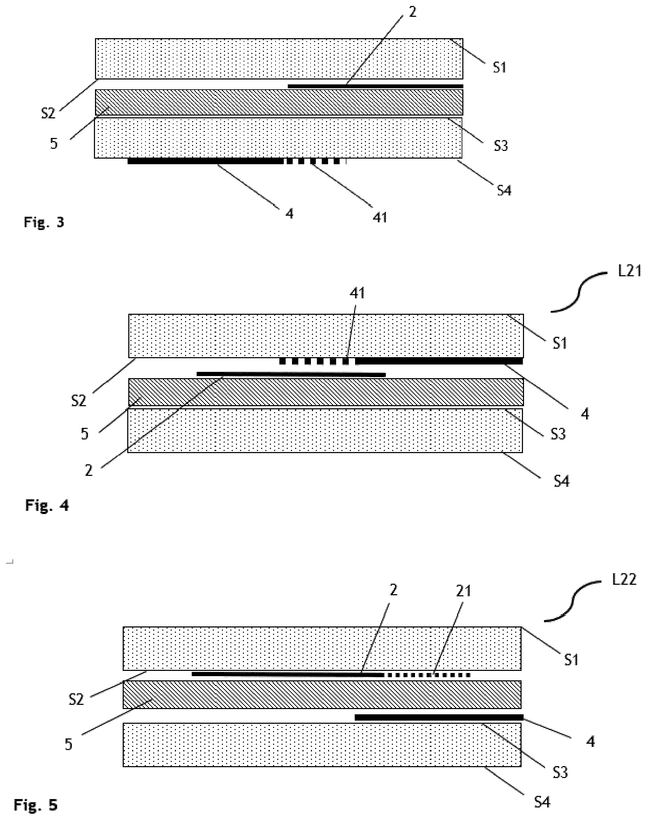

Fig. 3 shows a cross section of a another comparative laminate not according to the invention. In contrast to Fig. 2, the enamel print (5) on surface S4, i.e. the second opaque zone, is directly adjacent to a colour transition zone (41). However, this second opaque zone with the colour transition zone is further away from the first opaque zone (2) not having a colour transition zone.

Preferably, the second opaque zone with a light transmission of less than 10% of visible light on at least one side of the first and/or the second glass sheet comprises a colour transition zone, wherein the opaqueness of the colour transition zone is gradually decreasing over a length of at least 1 mm from a light transmission of less than 10% of visible light on the one end directly adjacent to the first opaque zone to a light transmission of more than 50% on the other end of the colour transition zone.

More preferably, the colour transition zone overlaps with the first opaque zone at least 1 mm measured from the other end of the colour transition zone. The term "overlap" is intended to denote that the first opaque zone and the colour transition zone overlap given a direction of view which is orthogonal to the surface S1 towards surface S4.

Fig. 4 shows a cross section of a laminate L21 according to this preferred embodiment. In contrast to Fig. 1, the enamel print (5) on surface S2, i.e. the second opaque zone, is closer to surface S1, i.e. closer the outside of the motor vehicle, than the first opaque zone (2), and thus, is directly adjacent to a colour transition zone (41). The colour transition zone (41) overlaps with the first opaque zone.

Fig. 8 is a variation of Fig. 4 in that film A with the first opaque area is located on the other side of film B (5).

In a preferred embodiment, film A comprises a colour transition zone, wherein the opaqueness of the colour transition zone is gradually decreasing over a length of at least 1 mm from a light transmission of less than 10% of visible light on the one end directly adjacent to the first opaque zone to a light transmission of more than 50% on the other end of the colour transition zone.

More preferably, the colour transition zone overlaps with the second opaque zone at least 1 mm measured from the other end of the colour transition zone. The term "overlap" is intended to denote that the second opaque zone and the colour transition zone overlap given a direction of view which is orthogonal to the surface S1 towards surface S4.

Fig. 5 shows a cross section of a laminate L22 according this preferred embodiment of the present invention. Here, the first opaque zone of film A (2) is closer to the outside of the vehicle than the second opaque zone (4) on surface S3 and thus, is directly adjacent to a colour transition zone (21). The colour transition zone (21) overlaps with the second opaque zone.

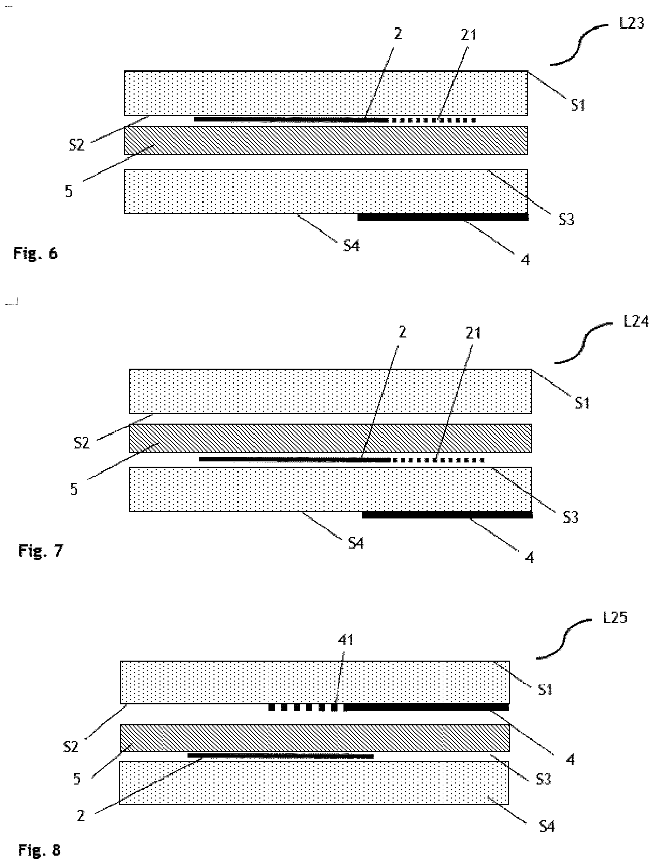

Fig. 6 and Fig. 7 show variations of this preferred embodiments wherein the first and/or the second opaque zones are located on different surfaces.

In another preferred embodiment, film A comprises a first colour transition zone, wherein the opaqueness of the first colour transition zone is gradually decreasing over a length of at least 1 mm from a light transmission of less than 10% of visible light on the one end directly adjacent to the first opaque zone to a light transmission of more than 50% on the other end of the colour transition zone, and the second opaque zone with a light transmission of less than 10% of visible light first on at least one side of the first and/or the second glass sheet comprises a second colour transition zone, wherein the opaqueness of the second colour transition zone is gradually decreasing over a length of at least 1 mm from a light transmission of less than 10% of visible light on one first end directly adjacent to the first opaque zone to a light transmission of more than 50% on the other end of the second colour transition zone.

More preferably, the first and the second colour transition zones overlap at least 1 mm measured from the other end of the first and the second colour transition zone, respectively.

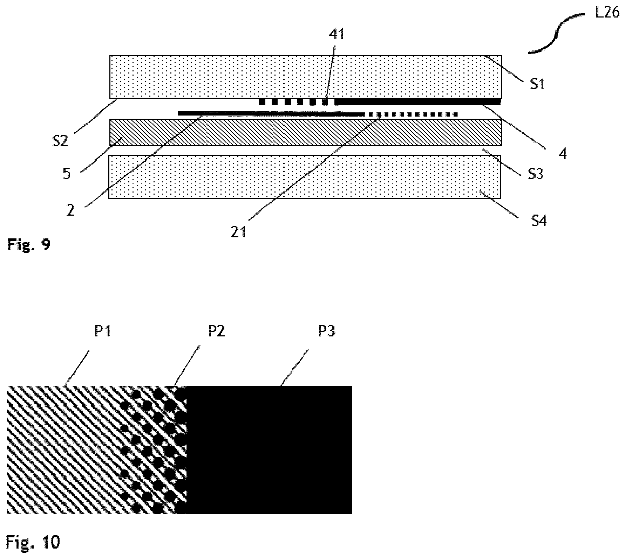

Fig. 9 shows a cross section of a laminate L26 according this preferred embodiment of the present invention wherein both opaque zones have a colour transition zone attached, which both overlap with the other opaque zone.

Also preferably, the colour transition zone is from 1 mm to less than 500 mm in length from the one end to the other end, more preferably from more than 10 mm to less than 100 mm.

The gradual decrease in opaqueness can be affected by various means. The darkness of colour can fade out, e.g. from black to various scale of grey. Also, decrease can be affected by forming a raster with macroscopic or microscopic printed elements, preferably circular or rectangular dots, with lines or with macroscopic printed objects of any possible design.

Fig. 10 an exemplary colour transition zone (P2) overlapping a first print (P1) and a second print (P3) realized by a gradient created by printed dots which gradually become smaller in size.

Film A

Preferably, film A comprises a polyvinyl acetal, most preferably polyvinyl butyral (PVB).

Film A in the starting state prior to lamination may have a thickness ratio to film B of less than 0.2.

The thickness of a film A in the starting state prior to lamination is 10 - 250 $\mu$m, preferably 15 - 100 $\mu$m, more preferably 20 - 30 $\mu$m.

The term "prior to lamination" refers to the state for the layers or films before combining them either in the lamination process of the laminated glass or prior to building a stack from the layers used for lamination.

Also preferably, the first opaque zone is provided by printing or coating at least one side of film A.

The printed or coated layer contains an inorganic or organic pigment, which should not dissolve in the polymer matrix and thus resist migration from film A to B.

As pigments, preferable carbon black, iron oxides, polyaniline, perylenes or spinel pigments are used. The pigments may be dispersed in a carrier fluid like water, alcohol or mixtures of alcohol and water. Furthermore, binders like polyvinyl alcohol, polyvinyl butyral, polyvinylpyrrolidone, polyacrylates, polyurethanes or poly styrene-acrylate may be present. Such printing compositions are referred to as "printing inks" or simply "inks" hereinafter.

Water-based printing inks are preferred over printing inks based on organic solvents since they do not swell or dissolve the film A and/or lead to film defects. Printing inks based on organic solvents can be used if the coating is thin and/or the drying step is fast such that the solvent does not migrate into the PVB film. It is beneficial to use a low molecular weight PVB as binder for the printing inks since it ensures good compatibility with the PVB containing films A and B.

The printing inks can be applied via techniques that are commonly known in the printing industry such as offset printing, rotogravure printing, flexography, digital printing and screenprinting, followed usually by a drying step.

The dry-film thickness of the printed parts is between 1-50 $\mu$m depending on printing technique and required opacity. Usually the dry-film thickness is between 10-30 $\mu$m. High enough total dry-film thicknesses can be achieved by overlaying ink-layers through repetition of sequential printing / coating steps.

Films A used in accordance with the invention preferably contains, prior to lamination, less than 10 % by weight, more preferably less than 5 % by weight, most preferably less than 3 % by weight, and specifically no intentionally added plasticiser. In a preferred embodiment, film A contains 0.1 - 3 % by weight of plasticiser.

Film B

Film B may be any plasticized PVB-film known in the art. The films A and B may contain, in the starting state prior to lamination and/or in a stack prepared for lamination between glass sheets, a single plasticiser as well as mixtures of plasticisers both of different and identical composition. The term "different composition" refers to both the type of plasticiser and proportion thereof in the mixture. Film A and film B after lamination, i.e. in the finished laminated glass, preferably have the same plasticisers WA and WB. In a preferred variant, film A in its starting state, however, does not contain any plasticiser and after lamination contains plasticiser WB in equilibrium amount.

The thickness of film B in the starting state is 380 - 2500 $\mu$m, preferably 600 - 1000 $\mu$m, preferably 700 - 900 $\mu$m. Plasticiser-containing films B used in accordance with the invention contain, in the starting state prior to lamination, at least 22 % by weight, such as 22.0 - 45.0 % by weight, preferably 25.0 - 32.0 % by weight and in particular 26.0 - 30.0 % by weight plasticiser.

Polyvinyl acetal

The polyvinyl acetal used in accordance with the invention results in particular from the reaction of at least one polyvinyl alcohol with one or more aliphatic unbranched keto-compounds containing 2 to 10 carbon atoms. To this end, n-butyraldehyde is preferably used.

The polyvinyl alcohols or ethylene vinyl alcohol copolymers used to produce the polyvinyl acetals in the films A or B may be identical or different, pure or a mixture of polyvinyl alcohols or ethylene vinyl alcohol copolymers with different degree of polymerisation or degree of hydrolysis.

The films A or B preferably contain polyvinyl acetals having a proportion of polyvinyl acetate groups, either identically or differently, of 0.1 to 20 mol %, preferably 0.5 to 3 mol %, or 5 to 8 mol %.

The polyvinyl alcohol content of the polyvinyl acetal used in film A may be between 6 - 26 % by weight, 8 - 24 % by weight, 10 - 22 % by weight, 12 - 21 % by weight, 14 - 20 % by weight, 16 - 19 % by weight and preferably between 16 and 21 % by weight or 10 - 16 % by weight.

Plasticizer

Films A and/or B used in accordance with the invention may contain, as plasticiser, one or more compounds selected from the following groups:

- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

By definition, plasticisers are organic liquids having a high boiling point. For this reason, further types of organic liquids having a boiling point above 120 °C can also be used as plasticiser.

In addition, films A and B may contain further additives, such as residual quantities of water, UV absorber, antioxidants, adhesion regulators, optical brighteners or fluorescent additives, stabilisers, colourants, processing aids, inorganic or organic nanoparticles, pyrogenic silicic acid and/or surface active substances.

Lamination Process

The present invention also relates to a method for producing the described glass laminates, in which the film A is positioned on a glass sheet, then covered by at least one film B, and a second glass sheet is then applied.

Alternatively, it is possible for film B to be positioned on a glass sheet, then to be covered by at least one film A, and for a second glass sheet to be applied.

The lamination step for producing a laminated glass is preferably carried out such that films A and B are positioned between two glass sheets and the layered body thus prepared is pressed under increased or reduced pressure and increased temperature to form a laminate.

To laminate the layered body, the methods with which a person skilled in the art is familiar can be used with and without prior production of a pre-laminate.

So called "autoclave processes" are carried out at an increased pressure from approximately 10 to 15 bar and temperatures from 100 to 150 °C during approximately 2 hours. Vacuum bag or vacuum ring methods, for example according to EP 1 235 683 B1, function at approximately 200 mbar and 130 to 145 °C.

Vacuum laminators may also be used. These consist of a chamber that can be heated and evacuated, in which laminated glazings can be laminated within 30 - 60 minutes. Reduced pressures from 0.01 to 300 mbar and temperatures from 100 to 200 °C, in particular 130 - 160 °C, have proven their worth in practice.

The glass film laminate may then be subjected to an autoclave process.

It is also possible for the films B to have a wedge-shaped thickness profile. The laminated glass laminate according to the invention obtains a wedge-shaped thickness profile even with plane-parallel thickness profile of the film A and can be used in motor vehicle windscreens for HUD displays.

Another aspect of the present invention concerns the use of the laminated glass as described above for windscreens, back-lights and side glazing for cars, busses, trucks, ships or airplanes.

Measurement methods

The vinyl alcohol content and vinyl acetate content of the polyvinyl (ethylene) acetals are determined in accordance with DIN ISO 3681 (Acetate content) and DIN ISO 53240 (PVA content).

The colour of the opaque zones is characterized by using colour measurement device ColourQuest XE by Hunterlab. Due to the very low light transmittance of the opaque zones, the measurement needs to be conducted in reflection mode. As a result individual colour values L*, a*, b* from the CIELAB system are obtained. The differences in reflected colour can be quantified as ΔE value between the first and the second opaque zone. Preferably, ΔE is equal to or below 15, more preferably below 10 and most preferably below 5.

The light transmission of the second opaque zone on the glass sheet and - if present - the colour transition zone on the glass sheet is measured according to DIN EN 410. The light transmission is measured on the glass sheet as such before lamination.

The light transmission of the first opaque zone and - if present - the colour transition zone on film A is calculated from the optical density, which in turn is measured using a Colorlite sd350 densitometer device with a standard probe head and a measuring area of 4 mm. The measuring area is located on the line where the first opaque zone and the corresponding colour transition zone meet as well as on a line determined by the end of the opaque zone. The light transmission is measured on film A as such before lamination. The light transmission $T_\lambda$ can be calculated from the measured optical density $OD_\lambda$ using the following formula:

$$OD_\lambda = \log_{10} \frac{1}{T_\lambda}$$

Examples

*Sample 1 (Comparative)*

A 50 μm thin PVB film is printed to create a 50 mm wide and 100 mm long opaque black print layer on the PVB. The print layer has an optical density of > 6.10 measured with the Colorlite sd350 in transmission mode. The colour of the print layer in a laminated glass prepared as described below is L* = 5.79, a* = -0.10, b* =-0.10 measured with the ColorQuest XE by Hunterlab.

The printed PVB film is used together with a Trosifol® PVB film V200 of 0.76 mm thickness commercially available from Kuraray Europe GmbH to prepare a glass laminate according to Fig. 3 which is having a full (4) 50 mm x 100 mm and partial 50 mm x 10 mm (41) enamel print on side S4 of the second glass sheet. The enamel print is characterized by a colour of L* = 5.7, a* = -0.3, b* = -0.5 which is measured through surface S1 with the ColorQuest XE by Hunterlab. The printed PVB and the ceramic print are oriented in a way that the printed PVB superimposes the partial ceramic print.

*Sample 2*

A 50 μm thin PVB film is printed to create a 50 mm wide and 100 mm long opaque black print layer on the PVB. The print layer has an optical density of > 6.10 measured with the Colorlite sd350. The colour of the print layer is L* = 5.79, a* = -0.10, b* = - 0.10 measured with the ColorQuest XE by Hunterlab.

The printed PVB film is used to prepare a glass laminate according to Fig. 4 which is having a full (4) 50 mm x 100 mm and partial 50 mm x 10 mm (41) ceramic print on side S2 of the first glass sheet. The ceramic print is characterized by a colour of L* = 5.7, a* = -0.3, b* = -0.5 which is measured through surface S1 with the ColorQuest XE by Hunterlab. The printed PVB and the ceramic print are oriented in a way that the partial ceramic print superimposes the printed PVB.

*Sample 3*

A 50 μm thin PVB film is printed to create a 50 mm wide and 100 mm long opaque black print layer on the PVB. The colour of the print layer is L* = 5.79, a*= -0.10, b*=-0.10 measured through surface S1 with the ColorQuest XE by Hunterlab. The print layer has an optical density of > 6.10 measured with the Colorlite sd350. The 50 mm x 100 mm full print is extended by a 50 mm x 10 mm partially printed colour transition zone (21). The partial print is a tonal value gradient which starts with full tone and linearly decreases to 1% tonal value. The tonal value gradient is realized by rasterizing the partial print and decreasing the printed structures per area from 100% to 1%. A raster of 54 lines per centimetre is used.

The printed PVB film is used to prepare a glass laminate according to Fig. 5 which is having a full (4) 50 mm x 100 mm ceramic print on side S3 of the second glass sheet. The ceramic print is characterized by a colour of L*= 5.7, a*= -0.3, b*= -0.5 which is measured through surface S1 with the ColorQuest XE by Hunterlab. The printed PVB and the ceramic print are oriented in a way that the partial print of the printed PVB superimposes the ceramic print.

*Sample 4*

Sample 4 is prepared and structured as Sample 3, however the printed PVB film is located between the conventional PVB film (5) and the surface S3 and its enamel print(4).

*Sample 5*

A 50 μm thin PVB film is printed to create a 50 mm wide and 100 mm long opaque black print layer on the PVB. The print layer has an optical density of > 6.10 measured with the Colorlite sd350. The colour of the print layer is L* = 5.79, a*= -0.10, b*=-0.10 measured with the ColorQuest XE by Hunterlab. The 50 mm x 100 mm full print on the PVB is extended by a 50 mm x 10 mm colour transition zone with partial print (21). The partial print is a tonal value gradient which starts with full tone and linearly decreases to 1% tonal value. The tonal value gradient is realized by rasterizing the partial print and decreasing the printed structures per area from 100% to 1%. A raster of 54 lines per centimetre is used.

The printed PVB film is used to prepare a glass laminate according to Fig. 9 which is having a full (4) 50 mm x 100 mm and partial 50 mm x 10 mm (41) ceramic print on side S2 of the first glass sheet. The ceramic print is characterized by a colour of L* = 5.7, a* = -0.3, b* = -0.5 which is measured through surface S1 with the ColorQuest XE by Hunterlab. The printed PVB and the ceramic print are oriented in a way that the partial print of both layers superimpose the respective full print of the other layer.

Evaluation

All samples 1 to 5 are visually inspected from side of surface S1 by a professional person judging the quality of glass laminates by naked eye.

All samples are inspected outdoors under natural daylight and indoors under an artificial light source (fluorescent tube with 28W, 2600 lm, Ra > 80, light colour 4000K).

The colour transition between both printed layers (enamel print and PVB print) are judged regarding a) how easily the transition can be noticed (perceptibility ratings: 1 not possible to 10 very easy) and b) how pleasing the transition is perceived (Total Impression: 1 unpleasant - 10 pleasant).

Following results are obtained:

| Sample | Outdoors | | Indoors | |
|--------|----------|---------------|----------|---------------|
| | Perceptibility | Total Impression | Perceptibility | Total Impression |
| 1 | 10 | 1 | 10 | 1 |
| 2 | 8 | 5 | 8 | 5 |
| 3 | 6 | 6 | 6 | 6 |
| 4 | 5 | 7 | 5 | 7 |
| 5 | 8 | 5 | 8 | 5 |

In order to show the influence of the particular design of the colour transition zone, the following samples are prepared and rated in the same manner as described for samples 1 to 5.

*Samples 6 - 11*

Samples 6 to 11 have the same composition and structure as sample 4. However, the length and resolution of the smallest printed structures of the gradient of the partial print in the colour transition zone (21) varies according to following table:

| Sample laminate | Length of color transition zone on film A [mm] | Tonal value at the end of transition zone | Gradient type | Raster [L/cm] print on film A |
| --- | --- | --- | --- | --- |
| 6 | 20 | 1% | linear | 54 |
| 7 | 40 | 1% | linear | 54 |
| 8 | 60 | 1% | linear | 54 |
| 9 | 20 | 1% | linear | 100 |
| 10 | 40 | 1% | linear | 100 |
| 11 | 60 | 1% | linear | 100 |

Samples 6 to 11 were evaluated in the same way as samples 1 to 5. The following results were obtained:

| Sample | Outdoors | | Indoors | |
| --- | --- | --- | --- | --- |
| | Perceptibility | Total Impression | Perceptibility | Total Impression |
| 6 | 4 | 7.5 | 4 | 7.5 |
| 7 | 3 | 8 | 3 | 8 |
| 8 | 2.5 | 8.5 | 2.5 | 8.5 |
| 9 | 3 | 8.5 | 3 | 8.5 |
| 10 | 2 | 9 | 2 | 9 |
| 11 | 1.5 | 9.5 | 1.5 | 9.5 |

**Claims**

1. A laminated glass for a motor vehicle comprising a first glass sheet and a second glass sheet laminated by means of at least one thermoplastic interlayer, wherein

   • the at least one thermoplastic interlayer comprises a film A comprising a first opaque zone with a light transmission of less than 10% of visible light, and a film B comprising a polyvinyl acetal and a plasticizer, and wherein
   • the first and/or the second glass sheet comprises at least on one side a second opaque zone with a light transmission of less than 10% of visible light, and wherein
   • the opaque zone selected from the first opaque zone and the second opaque zone which is located closer to the side of the laminated glass facing the outside of the motor vehicle is directly adjacent to a colour transition zone, wherein the opaqueness of the colour transition zone is gradually decreasing over a length of at least 1 mm from a light transmission of less than 10% of visible light on the one end directly adjacent to the opaque zone to a light transmission of more than 50% on the other end of the colour transition zone.

2. The laminated glass according to claim 1 wherein film A comprises a colour transition zone, wherein the opaqueness of the colour transition zone is gradually decreasing over a length of at least 10 mm from a light transmission of less than 10% of visible light on the one end directly adjacent to the first opaque zone to a light transmission of more than 50% on the other end of the colour transition zone.

3. The laminated glass according to claim 2 wherein the colour transition zone overlaps with the second opaque zone at least 10 mm measured from the other end of the colour transition zone.

4. The laminated glass according to claim 1 wherein the second opaque zone with a light transmission of less than 10% of visible light on at least one side of the first and/or the second glass sheet comprises a colour transition zone, wherein the opaqueness of the colour transition zone is gradually decreasing over a length of at least 1 mm from a light transmission of less than 10% of visible light on the one end directly adjacent to the first opaque zone to a light transmission of more than 50% on the other end of the colour transition zone.

5. The laminated glass according to claim 4 wherein the colour transition zone overlaps with the first opaque zone at least 1 mm measured from the other end of the colour transition zone.

6. The laminated glass according to any one of claims 1 to 3 wherein film A comprises a first colour transition zone, wherein the opaqueness of the first colour transition zone is gradually decreasing over a length of at least 1 mm from a light transmission of less than 10% of visible light on the one end directly adjacent to the first opaque zone to a light transmission of more than 50% on the other end of the colour transition zone, and the second opaque zone with a light transmission of less than 10% of visible light first on at least one side of the first and/or the second glass sheet comprises a second colour transition zone, wherein the opaqueness of the second colour transition zone is gradually decreasing over a length of at least 1 mm from a light transmission of less than 10% of visible light on one first end directly adjacent to the first opaque zone to a light transmission of more than 50% on the other end of the second colour transition zone.

7. The laminated glass according to claim 6 wherein the first and the second colour transition zones overlap at least 1 mm measured from the other end of the first and the second colour transition zone, respectively.

8. The laminated glass according to any one of claims 1 to 7 wherein the film A comprises a polyvinyl acetal.

9. The laminated glass according to any one of claims 1 to 8 wherein the first opaque zone is provided by printing or coating at least one side of film A.

10. The laminated glass according to any one of claims 1 to 9 wherein the second opaque zone is provided by an enamel print on at least one side of the first and/or the second glass sheet.

11. The laminated glass according to any one of claims 1 to 10 wherein the colour transition zone is from more than 1 mm to less than 100 mm in length from the one end to the other end.

12. The laminated glass according to any one of claims 1 to 11 wherein the obscuration in the colour transition zone is provided in the shape of dots.

13. The laminated glass according to any one of claims 1 to 12 wherein, prior to lamination, the amount of plasticizer in film B is at least 22 % by weight based on the total weight of film B.

14. The laminated glass according to any one of claims 1 to 13 wherein, prior to lamination, the amount of plasticizer in film A, is less than 10 % by weight based on the total weight of film A.

15. The use of the laminated glass according to any one of claims 1 to 14 for windscreens, back-lights and side glazing for cars, busses, trucks, ships or airplanes.

Fig. 1

Fig. 2

Fig. 3

Fig. 4

Fig. 5

Fig. 6

Fig. 7

Fig. 8

**Fig. 9**

**Fig. 10**

Europäisches
Patentamt

European
Patent Office

Office européen
des brevets

# EUROPEAN SEARCH REPORT

Application Number

EP 21 19 3725

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 465 833 A1 (ASAHI GLASS CO LTD [JP]) 20 June 2012 (2012-06-20) * paragraphs [0001], [0005] − [0007], [0009] − [0018], [0025] − [0030], [0041] − [0045], [0055] − [0066], [0076] − [0085] * * claims 1-9 * * figures 4,5 * ----- | 1-15 | INV. B32B5/14 B32B17/10 |
| Y | EP 2 921 464 A1 (SEKISUI CHEMICAL CO LTD [JP]) 23 September 2015 (2015-09-23) * paragraphs [0001], [0007] − [0011], [0013], [0017] − [0021], [0072] − [0076], [0090] − [0093], [0099] − [0101], [0113] * * paragraphs [0150] − [0156], [0178], [0179] * * claims 1-6 * * figures 1-7 * ----- | 1-15 | |

|  |  |
|---|---|
| | TECHNICAL FIELDS SEARCHED (IPC) |
| | B32B |

The present search report has been drawn up for all claims

| Place of search | Date of completion of the search | Examiner |
|---|---|---|
| The Hague | 2 February 2022 | Girard, Sarah |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 19 3725

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2022

| Patent document cited in search report | | Publication date | Patent family member(s) | | Publication date |
|---|---|---|---|---|---|
| EP 2465833 | A1 | 20-06-2012 | BR | 112012003272 A2 | 01-03-2016 |
| | | | CN | 102471153 A | 23-05-2012 |
| | | | EP | 2465833 A1 | 20-06-2012 |
| | | | JP | 5668686 B2 | 12-02-2015 |
| | | | JP | WO2011019062 A1 | 17-01-2013 |
| | | | KR | 20120048536 A | 15-05-2012 |
| | | | US | 2012164409 A1 | 28-06-2012 |
| | | | WO | 2011019062 A1 | 17-02-2011 |
| EP 2921464 | A1 | 23-09-2015 | CN | 104781205 A | 15-07-2015 |
| | | | CN | 110053332 A | 26-07-2019 |
| | | | CN | 110078388 A | 02-08-2019 |
| | | | EP | 2921464 A1 | 23-09-2015 |
| | | | JP | 6169068 B2 | 26-07-2017 |
| | | | JP | WO2014077328 A1 | 05-01-2017 |
| | | | US | 2016288460 A1 | 06-10-2016 |
| | | | US | 2020070479 A1 | 05-03-2020 |
| | | | WO | 2014077328 A1 | 22-05-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160243796 A
- WO 2019121535 A1
- EP 1235683 B1